# EUROPÄISCHE PATENTANMELDUNG

(11) **EP 0 691 356 A1**
(43) Veröffentlichungstag der Anmeldung: **10.01.1996**
(21) Anmeldenummer: 95107109.1
(22) Anmeldetag: 11.05.1995
(51) Int. Cl.: C08G 18/40, C09D 175/04

(54) **Einkomponentige wässrige Beschichtungssysteme enthaltend eine reaktive Additiv-Komponente**

(30) Priorität: 09.07.1994 DE 4424277
(71) Anmelder: CHEMISCHE WERKE HÜLS AG, D-45764 Marl (DE)
(72) Erfinder: Lange, Hartwig, Dr., D-45721 Haltern (DE); Ortelt, Martina, Dr., D-45770 Marl (DE)

(57) **Zusammenfassung**

Einkomponentige wäßrige Beschichtungssysteme auf Basis von
A) hydrophilen, hydroxygruppenhaltigen Polymeren bestehend aus Polyacrylatpolyolen oder Polyesterpolyolen,
B) Vernetzern bestehend aus bei Raumtemperatur wasserbeständigen Polyisocyanaten oder blockierten Polyisocyanaten,
C) ggf. Pigmenten sowie üblichen lacktechnischen Hilfsmitteln, wie Entschäumern, Verlaufsmitteln, Katalysatoren und Thixotropiemitteln,
und einer weiteren reaktiven Additiv-Komponente D, in einer Menge von 2 bis 20 Massen-% bezogen auf den Gesamtfestkörpergehalt von A, B und D, wobei die Additiv-Komponente D dadurch charakterisiert ist, daß sie reaktive OH-, NH-, NH₂- und/oder SH-Gruppen und eine Funktionalität von mindestens 1,5 bis 3,0 bezüglich der Vernetzer B, eine Löslichkeit im Wasser unterhalb von 2 Massen-% und eine Molmasse von 500 - 2 000 g/Mol aufweist.

## Beschreibung

Die Erfindung betrifft einkomponentige wäßrige Beschichtungssysteme, die eine zusätzliche reaktive Additiv-Komponente enthalten sowie die Verwendung dieser Beschichtungssysteme zur Herstellung von Klar- und Pigmentlacken.

Wäßrige Beschichtungssysteme benötigen gewöhnlich eine gewisse Menge organischer Lösemittel, um bei Raumtemperatur (RT) eine gute Filmbildung zu gewährleisten und hochglänzende Beschichtungen zu ergeben.

Als Lösemittel, die häufig mit "Filmbildehilfsmittel" bezeichnet werden, dienen zu diesem Zweck nach dem Stand der Technik gewöhnlich niedermolekulare Glykole, Glykolether und Glykoletheracetate (Geel, Journal of the Oil & Colour Chemists' Association 1993 (2) 76 - 81; Alahapperuma u. Glass, Journal of Coatings Technology 63, 799 (1991) 69 - 78).

Nachteil dieser Art Filmbildehilfsmittel gemäß dem Stand der Technik ist, daß jene nach erfolgter Filmbildung je nach Flüchtigkeit und Härtungsbedingungen schnell oder über längere Zeit hin aus der Beschichtung abdampfen und so eine umweltbelastende Emission aus den auf Umweltverträglichkeit ausgerichteten wäßrigen Systemen darstellen. Langsam entweichende Lösemittel können den zusätzlichen Nachteil haben, daß sie die Beschichtung anfällig gegenüber Feuchtigkeit belassen (Storfer u. Yuhas, Coating 1 (1988) S. 2 - 7).

Diese Nachteile, die abdampfende Lösemittel innehaben, versuchten Blank (Journal of Coatings Technology 49, 631 (1977) S. 46 - 59 sowie 60, 764 (1988) S. 43 - 50 sowie 61, 777 (1989) S. 119 - 128) sowie Shain (Modern Paint and Coatings June 1993, S 32 - 38) dadurch zu beseitigen, daß sie gezielt wasserlösliche niedermolekulare Verbindungen (u. a. Bisphenol A-Ethylenoxid-Addukt bzw. Polyurethan-Oligomere) synthetisierten, die über ihre funktionellen Hydroxylgruppen mit bestimmten Vernetzerharzen (Harnstoff-Formaldehyd, Melamin-Formaldehyd, Benzoguanin-Formaldehyd) reagieren und so nicht aus der Beschichtung entweichen können. Es gelang also gemäß den Veröffentlichungen von Blank und Shain, abdampfende Hilfslösemittel durch niedermolekulare Reaktivverdünner zu ersetzen. Blank bevorzugte als Reaktivverdünner stark hydrophile, vorzugsweise wasserlösliche Oligomere, wie z. B. das Addukt von Bisphenol A mit 6 Ethylenoxid: Nachteil dieses Sytems ist nach Angaben von Autor Blank die beschränkte Beständigkeit der in der Beschichtung verbleibenden Verbindungen bei Anwendung im Außenbereich. Diese nachteilige schlechte Beständigkeit läßt sich auf den bekannten Abbau von Polyethylen- und Polypropylenethern durch ultraviolette Strahlung zurückführen, der Beschichtungen bei Sonnenlichteinwirkung ausgesetzt sind (Shain).

Handelsübliches Polypropylenglykol (PPG 400) und Polytetramethylenglykol (PTMG 600) weisen nach Blank beide in den von ihm hergestellten und untersuchten Systemen in Kombination mit den verwendeten Formaldehyd-haltigen Vernetzerharzen sehr schlechte Eigenschaften auf, wie schlechte Haftung, schlechte Wasserbeständigkeit, schlechte Ergebnisse im Salzsprühtest sowie niedrige Härte, und können daher nur zu einem kleinen Teil mitverwendet werden.

Nur speziell hergestellte niedermolekulare wasserlösliche Polyurethandiole erwiesen sich gemäß Blank und Shain als allgemein geeignete reaktive Hilfslösemittel, welche auch eine gute Beständigkeit im ultravioletten Licht aufweisen. Diese niedermolekularen Polyurethane werden jedoch nicht großtechnisch hergestellt, sondern stellen Feinchemikalien dar, deren breiter Einsatz als reaktive Hilfslösemittel z. B. als Ersatz von abdampfenden Glykolen oder Glykolethern ökonomische Grenzen überschreitet: Die niedermolekularen Polyurethane stellen somit keine wirtschaftlich vertretbare Alternative zu abdampfenden Hilfslösemitteln dar.

Gemäß EP-A-0 542 085 werden zu wäßrigen zweikomponentigen Polyurethansystemen nichtflüchtige wasserlösliche Polyetherpolyole zugesetzt, die mit Hilfe der Isocyanatvernetzer in die Beschichtung eingebaut werden und auf diese Weise nicht in die Umwelt entweichen: Wasserlösliche Polyetherpolyole werden durch Ethoxylierung oder Propoxylierung alkoholischer Verbindungen erhalten (vgl. Beispiele EP-A-0 542 085). Durch Ethoxylierung bzw. Propoxylierung erhaltene Glykolether können zwar wasserlöslich sein, besitzen jedoch den großen Nachteil, daß sie keine ausreichende Stabilität gegenüber einfallender UV-Strahlung besitzen, die auf Beschichtungen im Außenbereich einwirkt.

Wasserlösliche Polyethylenglykole und Polypropylenglykole scheiden daher als Zusatzmittel für hochwertige Lacke aus, die auch im Außenbereich eingesetzt werden.

Aufgabe war es, die Nachteile der Beschichtungssysteme gemäß dem Stand der Technik zu eliminieren. Die Aufgabe wird durch einkomponentige wäßrige Beschichtungssysteme auf Basis von
A) hydrophilen, hydroxygruppenhaltigen Polymeren,
B) Vernetzern bestehend aus bei Raumtemperatur wasserbeständigen Polyisocyanaten oder blockierten Polyisocyanaten oder Melaminharzen und
C) ggf. Pigmenten sowie üblichen lacktechnischen Hilfsmitteln, wie Entschäumern, Verlaufsmitteln, Katalysatoren und Thixotropiemitteln,
und einer weiteren reaktiven Additiv-Komponente D, in einer Menge von 2 bis 20 Massen-% bezogen auf den Gesamtfestkörpergehalt von A, B und D, wobei die Additiv-Komponente D dadurch charakterisiert ist, daß sie reaktive OH-, NH-, NH₂- und/oder SH-Gruppen und eine Funktionalität von mindestens 1,5 bzgl. der Vernetzer B, eine Löslichkeit in Wasser unterhalb von 2 Massen-% und eine Molmasse von 500 - 2000 g/Mol aufweist, gelöst.

Die erfindungsgemäßen wäßrigen Beschichtungssysteme sind erhältlich durch Mischen der Komponenten A, B und ggf. C und der weiteren reaktiven Additiv-Komponente D, in einer Menge von 2 bis 20 Massen-% bezogen auf den Gesamtfestkörpergehalt von A, B und D, ggf. in einem organischen Hilfslösemittel und anschließendes Überführen dieser Mischung in ein wäßriges System. Sie können danach als Suspension, Dispersion, Emulsion oder als Lösung vorliegen.

Als Additiv-Komponente D werden gegenüber Isocyanat reaktionsfähige Gruppen aufweisende lineare oder schwach verzweigte Verbindungen eingesetzt, die mehrere, durchschnittlich mindestens 1,5 "aktive Wasserstoffatome" besitzen, d. h. gemäß dem Zerewitinoff-Test reaktive. Aktive Wasserstoffatome sind Wasserstoffatome, die an Sauerstoff, Schwefel oder Stickstoff gebunden sind.

Beispiele für derartige Verbindungen sind Polyole wie Polyetherpolyole, Polyesterpolyole, Polylactonpolyole, Polyacetalpolyole, Polyesteramidpolyole, Polycarbonatpolyole, Polyolefinpolyole, Hydroxylgruppen enthaltende Acrylestercopolymere, Polythioetherpolyole, Polythioetheresterpolyole sowie Polythiole und Polyamine mit primären und/oder sekundären Amingruppen. Diese können ebenfalls in Mischungen in der reaktiven Additiv-Komponente D enthalten sein.

Durch die reaktive Additiv-Komponente D wird sowohl die Mindestfilmbildetemperatur (DIN 53 787) der erfindungsgemäßen Beschichtung herabsetzt als auch die Pigmentierbarkeit der wäßrigen Systeme verbessert, so daß mit Hilfe der weiteren reaktiven Additiv-Komponente D hochglänzende pigmentierte Beschichtungen erhalten werden können.

Der technische Vorteil besteht darin, daß die erfindungsgemäß zugesetzte reaktive Additiv-Komponente D nahezu vollständig eingebaut wird und nicht während oder nach dem Einbrennen in die Umwelt verdampft. Vergleichbare wäßrige Systeme gemäß des Standes der Technik aus A, B sowie ggf. C ohne den Zusatz der reaktiven Additiv-Komponente D lieferten keine Lacke, die nach Trocknung gleichförmige, ungestörte, glänzende Oberflächen ergeben. Selbst bei anschließenden Härtungstemperaturen zwischen 120 bis 180 °C konnten keine akzeptablen Lackfilme erhalten werden.

Aus den erfindungsgemäßen wäßrigen Systemen aus A, B sowie ggf. C mit dem Zusatz von 2 - 20 Massen-% reaktiven Additiv-Komponente D bezogen auf den Gesamtfestkörpergehalt von A, B und D, vorzugsweise Polytetramethylenglycol einer mittleren Molmasse von 500 - 2 000 g/Mol, besonders bevorzugt 500 - 1 200 g/Mol, können hingegen nach Verdunsten des Wassers und Trocknen der Lacke bei Raumtemperatur sowohl ungestörte, rißfreie, hochglänzende klare als auch ungestörte, rißfreie, hochglänzende, weißpigmentierte Beschichtungen erhalten werden.

Während des Härtens durch Einbrennen bei hinreichend hoher Temperatur wird die reaktive Additiv-Komponente D fortschrittlicherweise weitestgehend in den Film fest mit eingebaut. Diese entweicht deshalb bei geeigneten Vernetzungsbedingungen im Gegensatz zu den flüchtigen Filmbildehilfsmitteln gemäß dem Stand der Technik nicht in die Umwelt. Die Einbindung erfolgt über chemische Reaktion mit den Vernetzern B. Die reaktive Additiv-Komponente D besitzt üblicherweise eine Funktionalität im Bereich 1,5 - 3,0, besonders bevorzugt jedoch von 2,0, für die chemische Umsetzung der unter B aufgeführten Vernetzer.

Die erfindungsgemäß zugesetzte reaktive Additiv-Komponente D verbleibt bis zur Härtung unangebunden gelöst, emulgiert, dispergiert oder suspendiert und wird erst bei der Härtung über die Vernetzer B miteinander bzw. mit dem Polymer A verknüpft.

Eine Anbindung der reaktiven Additiv-Komponete D an das Polymer A vor der Härtungsreaktion mit den Vernetzern B, wie sie z. B. in den somit von dieser Erfindung deutlich abgegrenzten Schriften DE 36 41 494 und DE 38 31 169 beansprucht wird, findet nicht statt: Polymer A, Vernetzer B und die reaktive Additiv-Komponente D liegen nebeneinander gelöst, emulgiert, dispergiert, bzw. suspendiert vor ohne chemische Anbindung aneinander bis zum Zeitpunkt der Vernetzung während oder nach Abdunsten des Wassers.

Die Herstellung der erfindungsgemäßen wäßrigen Beschichtungssysteme erfolgt durch Mischen der Komponenten A - D oder vorzugsweise in organischen Lösemitteln. Anschließend wird diese Mischung durch Zugabe von Wasser und Entfernung der Lösemittel in die erfindungsgemäßen wäßrigen Beschichtungssysteme überführt. Diese können dann sowohl als Suspension, Dispersion, Emulsion oder auch als Lösung in der wäßrigen Phase vorliegen.

Die folgenden Beispiele dienen der näheren Erläuterung der Erfindung.

### Beispiel 1:

- A: 500 g eines Polyesters einer Säurezahl von 19 mg KOH/g und einer Hydroxylzahl von 36 mg KOH/g, aufgebaut aus Isophthalsäure, Hexahydrophthalsäure, Trimellitsäureanhydrid, Neopentylglykol und Hexandiol-1,6,
- D: als reaktive Additiv-Komponente D 27,5 g Polytetramethylenglykol mit der Hydroxylzahl von 171 mg KOH/g (TERATHANE® 650 der Fa. Du Pont) sowie
- B: 161 g eines blockierten Polyisocyanates, hergestellt nach einem in DE 27 32 662 beschriebenen Verfahren aus dem Trimeren des Isophorondiisocyanats durch Blockierung mit Methylethylketoxim sowie 15 g Dimethylaminoethanol werden gemeinsam in 661 g Aceton gelöst und anschließend unter Rühren mit 1 664,8 g (entsalzenem) Wasser versetzt. Das entstehende wäßrige System wird am Rotationsverdampfer von Aceton befreit und aufkonzentriert, bis ein Feststoffgehalt von 40 Massen-% erreicht wird.
Die erhaltene Dispersion besitzt eine Mindestfilmbildetemperatur (nach DIN 53 787) von 17 °C und liefert nach Trocknung bei RT hochglänzende Klar- und hochglänzende pigmentierte Beschichtungen, die bei 160 °C und 15 Minuten zu hochwertigen, glänzenden PUR-Beschichtungen aushärten.

### Beispiel 2:

Zu A) 450 g einer 54,7 prozentigen Polyacrylatlösung in Methylethylketon, die durch Polymerisation von Methylmethacrylat, n-Butylacrylat, Hydroxyethylacrylat und Acrylsäure hergestellt wurde und deren Festharz eine Säurezahl von 40 mg KOH/g und eine Hydroxylzahl von 53 mg KOH/g aufweist, werden B) 160,85 g einer 65%igen Lösung in Methyletyhlketon eines blockierten Polyisocyanates, erhältlich nach einem in DE 27 32 662 beschriebenen Verfahren aus dem Trimeren des Isophorondiisocyanats durch Blockierung mit Methylethylketoxim sowie als reaktive Additiv-Komponente D 16,6 g Polytetramethylenglykol einer Hydroxylzahl von 171 mg KOH/g (TERATHANE® 650 der Fa. Du Pont) sowie 11,0 g Dimethylaminoethanol hinzugegeben und darin gelöst.

Anschließend werden unter Rühren 745,7 g entsalzenes Wasser zugesetzt. Methylethylketon entfernt man am Rotationsverdampfer und engt die Dispersion ein, bis ein Feststoffgehalt von 37,8 Massen-% erreicht wird. Die erhaltene Dispersion besitzt eine Mindestfilmbildetemperatur (nach DIN 53 787) von 8 °C und ergibt hochglänzende Klar- und hochglänzende, weißpigmentierte Beschichtungen, die bei 180 °C innerhalb 30 Minuten zu lösemittel- und wasserbeständigen Filmen vernetzen.

### Beispiel 3:

- A: 325 g eines Polyesters einer Säurezahl von 19 mg KOH/g und einer Hydroxylzahl von 36 mg KOH/g, aufgebaut aus Isophthalsäure, Terephthalsäure, Trimellitsäureanhydrid, Neopentylglykol, Hexandiol-1,6 und Ethylenglykol,
- D: als reaktive Additiv-Komponente D 22 g Polytetramethylenglykol mit der Hydroxylzahl von 171 mg KOH/g (TERATHANE® 650 der Fa. Du Pont) sowie
- B: 102 g eines blockierten Polyisocyanates, hergestellt nach einem in DE 27 32 662 beschriebenen Verfahren aus dem Trimeren des Isophorondiisocyanats durch Blockierung mit Methylethylketoxim sowie 9,8 g Dimethylaminoethanol werden gemeinsam in 230 g Aceton gelöst und anschließend unter Rühren mit 825 g (entsalzenem) Wasser versetzt. Das entstehende wäßrige System wird am Rotationsverdampfer von Aceton befreit und aufkonzentriert, bis ein Feststoffgehalt von 39 Massen-% erreicht wird.
Die erhaltene Dispersion besitzt eine Mindestfilmbildetemperatur (nach DIN 53 787) von 19 °C und liefert nach Trocknung bei Raumtemperatur hochglänzende Klar- und hochglänzende pigmentierte Beschichtungen, die bei 160 °C und 15 Minuten zu hochwertigen, glänzenden PUR-Beschichtungen aushärten.

### Vergleichsbeispiel I:

A) 350 g Polyester aus Beispiel 1 mit einer Säurezahl von 19 mg KOH/g und einer Hydroxylzahl von 36 mg KOH/g, aufgebaut aus Isophthalsäure, Hexahydrophthalsäure, Trimellitsäureanhydrid, Neopentylglykol und Hexandiol-1,6 sowie B) 83 g blockiertes Polyisocyanat, hergestellt nach einem in DE 27 32 662 beschriebenen Verfahren aus dem Trimeren des Isophorondiisocyanats durch Blockierung mit Methylethylketoxim sowie 10,55 g Dimethylaminoethanol werden gemeinsam in 433 g Aceton gelöst und unter Rühren mit 823 g (entsalzenen) Wasser versetzt. Das entstandene wäßrige System wird am Rotationsverdampfer von Aceton befreit und aufkonzentriert bis ein Feststoffgehalt von 43 Massen-% erreicht ist. Die erhaltene Dispersion besitzt eine Mindestfilmbildetemperatur (nach DIN 53 787) von 25 °C und liefert nach Trocknung bei RT keine geschlossenen Filme sondern rißhaltige Beschichtungen, die als Klarlack und als pigmentierter Weißlack matte, stumpfe Oberflächen ausbilden. Sie lassen sich nicht zu Beschichtungen mit akzeptablen Oberflächen aushärten.

### Vergleichsbeispiel II:

In A) 450 g einer 54,7%igen Polyacrylatlösung in Methylethylketon aus Beispiel 2, die durch Polymerisation von Methylmethacrylat, n- Butylacrylat, Hydroxyethylacrylat und Acrylsäure hergestellt wurde und deren Festharz eine Säurezahl von 40 mg KOH/g und eine Hydroxylzahl von 53 mg KOH/g aufweist, werden B) 85,95 g blockiertes Polyisocyanat, erhältlich nach einem in DE 27 32 662 beschriebenen Verfahren aus dem Trimeren des Isophorondiisocyanats durch Blockierung mit Methylethylketoxim sowie 11,0 g Dimethylaminoethanol gelöst.

Anschließend werden unter Rühren 674,3 g entsalzenes Wasser zugesetzt. Methylethylketon entfernt man am Rotationsverdampfer und engt die Dispersion ein, bis ein Feststoffgehalt von 37,7 Massen-% erreicht wird. Die erhaltene Dispersion besitzt eine Mindestfilmbildetemperatur (nach DIN 53 787) von 28 °C und liefert nach Trocknung bei RT keine geschlossenen Filme sondern rißhaltige Beschichtungen, die als Klarlack und als weißpigmentierter Lack matte, stumpfe Oberflächen ausbilden. Sie lassen sich nicht zu Beschichtungen mit akzeptablen Oberflächen aushärten.

### Vergleichsbeispiel III:

(A) 325 g Polyester aus Beispiel 3 mit einer Säurezahl von 19 mg KOH/g und einer Hydroxylzahl von 36 mg KOH/g, aufgebaut aus Isophthalsäure, Terephthalsäure, Trimellitsäureanhydrid, Neopentylglykol, Hexandiol-1,6 und Ethylenglykol sowie (B) 77 g blockiertes Polyisocyanat, hergestellt nach einem in DE 27 32 662 beschriebenen Verfahren aus dem Trimeren des Isophorondiisocyanats durch Blockierung mit Methylethylketoxim sowie 9,8 g Dimethylaminoethanol werden gemeinsam in 217 g Aceton gelöst und unter Rühren mit 747 g (entsalzenem) Wasser versetzt. Das entstandene wäßrige System wird am Rotationsverdampfer von Aceton befreit und aufkonzentriert, bis ein Feststoffgehalt von 40 Massen-% erreicht ist. Die erhaltene Dispersion besitzt eine Mindestfilmbildetemperatur (nach DIN 53 787) von 26 °C und liefert nach Trocknung bei Raumtemperatur keine geschlossenen Filme, sondern rißhaltige Beschichtungen, die als Klarlack und als pigmentierter Weißlack matte, stumpfe Oberflächen ausbilden. Sie lassen sich anschließend nicht zu Beschichtungen mit akzeptablen Oberflächen aushärten.

## Patentansprüche

1. Einkomponentige wäßrige Beschichtungssysteme auf Basis von
A) hydrophilen, hydroxygruppenhaltigen Polymeren bestehend aus Polyacrylatpolyolen oder Polyesterpolyolen,
B) Vernetzern bestehend aus bei Raumtemperatur wasserbeständigen Polyisocyanaten oder blockierten Polyisocyanaten,
C) ggf. Pigmenten sowie üblichen lacktechnischen Hilfsmitteln, wie Entschäumern, Verlaufsmitteln, Katalysatoren und Thixotropiemitteln,
und einer weiteren reaktiven Additiv-Komponente D, in einer Menge von 2 bis 20 Massen-% bezogen auf den Gesamtfestkörpergehalt A, B und D, wobei die Additiv-Komponente D dadurch charakterisiert ist, daß sie reaktive OH-, NH-, NH₂- und/oder SH-Gruppen und eine Funktionalität von mindestens 1,5 bis 3,0 bezüglich der Vernetzer B, eine Löslichkeit im Wasser unterhalb von 2 Massen-% und eine Molmasse von 500 - 2 000 g/Mol aufweist.

2. Einkomponentige wäßrige Beschichtungssysteme auf Basis von
A) hydrophilen, hydroxygruppenhaltigen Polymeren bestehend aus Polyurethanpolyolen,
B) Melaminharzen,
C) ggf. Pigmenten sowie üblichen lacktechnischen Hilfsmitteln, wie Entschäumern, Verlaufsmitteln, Katalysatoren und Thixotropiemitteln,
und einer weiteren reaktiven Additiv-Komponente D, in einer Menge von 2 bis 20 Massen-% bezogen auf den Gesamtfestkörpergehalt A, B und D, wobei die Additiv-Komponente D dadurch charakterisiert ist, daß sie gegenüber B reaktive OH-, NH-, NH₂- und/oder SH-Gruppen und eine Funktionalität von mindestens 1,5 bis 3,0 bezüglich der Vernetzer B, eine Löslichkeit im Wasser unterhalb von 2 Massen-% und eine Molmasse von 500 - 2 000 g/Mol aufweist.

3. Beschichtungssysteme nach Anspruch 1 oder 2,
dadurch gekennzeichnet,
daß als reaktive Additiv-Komponente D gegenüber Isocyanat reaktionsfähige Gruppen aufweisende lineare oder schwach verzweigte Verbindungen eingesetzt werden, die mehrere, durchschnittlich mindestens 1,5 aktive Wasserstoffatome besitzen, d. h. gemäß dem Zerewitinoff-Test reaktive.

4. Beschichtungssysteme nach Anspruch 3,
dadurch gekennzeichnet,
daß die reaktive Additiv-Komponente D Verbindungen umfaßt, die 2,0 solcher OH-, SH-, NH- und NH₂-Gruppen enthalten.

5. Beschichtungssysteme nach Anspruch 4,
dadurch gekennzeichnet,
daß als reaktive Additiv-Komponente D Polyole wie Polyetherpolyole, Polyesterpolyole, Polylactonpolyole, Polyacetalpolyole, Polyesteramidpolyole, Polycarbonatpolyole, Polyolefinpolyole, Hydroxylgruppen enthaltende Acrylestercopolymere, Polythioetherpolyole, Polythioetheresterpolyole sowie Polythiole und Polyamine mit primären und/oder sekundären Amingruppen, eingesetzt werden.

6. Beschichtungssysteme nach Anspruch 5,
dadurch gekennzeichnet,
daß Polytetramethylenglycole eingesetzt werden.

7. Beschichtungssysteme nach mindestens einem der Ansprüche 1 bis 6,
dadurch gekennzeichnet,
daß das wäßrige System als Suspension, Dispersion, Emulsion oder Lösung vorliegt.

8. Verfahren zur Herstellung von einkomponentigen wäßrigen Beschichtungssystemen auf Basis von
A) hydrophilen, hydroxygruppenhaltigen Polymeren bestehend aus Polyacrylatpolyolen oder Polyesterpolyolen,
B) Vernetzern bestehend aus bei Raumtemperatur wasserbeständigen Polyisocyanaten oder blockierten Polyisocyanaten,
C) ggf. Pigmenten sowie üblichen lacktechnischen Hilfsmitteln, wie Entschäumern, Verlaufsmitteln, Katalysatoren und Thixotropiemitteln,
dadurch gekennzeichnet,
daß diese durch Mischen der Komponenten A bis C und einer weiteren reaktiven Additiv-Komponente D, in einer Menge von 2 bis 20 Massen-% bezogen auf den Gesamtfestkörpergehalt von A, B und D, wobei die Additiv-Komponente D dadurch charakterisiert ist, daß sie gegenüber B reaktive OH-, NH-, NH₂- oder SH-Gruppen und eine Funktionalität von mindestens 1,5 bis 3,0 bezüglich der Vernetzer B, eine Löslichkeit im Wasser unterhalb von 2 Massen-% und eine Molmasse von 500 - 2 000 g/Mol aufweist, und anschließendes Überführen dieser Mischung in ein wäßriges System, erhalten werden.

9. Verfahren zur Herstellung von einkomponentigen wäßrigen Beschichtungssystemen auf Basis von
A) hydrophilen, hydroxygruppenhaltigen Polymeren bestehend aus Polyurethanpolyolen,
B) Melaminharzen,
C) ggf. Pigmenten sowie üblichen lacktechnischen Hilfsmitteln, wie Entschäumern, Verlaufsmitteln, Katalysatoren und Thixotropiemitteln,
dadurch gekennzeichnet,
daß diese durch Mischen der Komponenten A bis C und einer weiteren reaktiven Additiv-Komponente D, in einer Menge von 2 bis 20 Massen-% bezogen auf den Gesamtfestkörpergehalt von A, B und D, wobei die Additiv-Komponente D dadurch charakterisiert ist, daß sie gegenüber B reaktive OH-, NH-, NH₂- oder SH-Gruppen und eine Funktionalität von mindestens 1,5 bezüglich der Vernetzer B, eine Löslichkeit im Wasser unterhalb von 2 Massen-% und eine Molmasse von 500 - 2 000 g/Mol aufweist, und anschließendes Überführen dieser Mischung in ein wäßriges System, erhalten werden.

10. Verfahren nach den Ansprüchen 8 oder 9,
dadurch gekennzeichnet,
daß das Mischen von A, B, ggf. C und D in einem organischen Lösungsmittel durchgeführt wird.

11. Verwendung der wäßrigen Beschichtungssysteme nach mindestens einem der Ansprüche 1 bis 10 für saugende und nichtsaugende Substrate wie Metalle, polymere Kunststoffe und Holz, als bei Raumtemperatur filmbildende, hochglänzende Klar- oder pigmentierte Lacke, die durch anschließendes Einbrennen zu harten, elastischen und lösemittelbeständigen Filmen aushärten.
